# EUROPEAN PATENT APPLICATION

(11) **EP 0 917 076 A2**
(43) Date of publication of application: **19.05.1999**
(21) Application number: 98121145.1
(22) Date of filing: 11.11.1998
(51) Int. Cl.: G06F 17/60

(54) **System and method for electronic mass mailing**

(30) Priority: 12.11.1997 US 968651
(71) Applicant: PITNEY BOWES INC., Stamford Connecticut 06926-0700 (US)
(72) Inventor: Woodman, Clare E., Norwalk, CT 06851 (US); Daniels, Edward P., Jr., Trumbull, CT 06611 (US); Mitchell, Paul H., Danbury, CT 06811 (US); Rahrig, John G., Stratford, CT 06497 (US); Kwant, John F., Tarrytown, NY 10591 (US); Schumacher, Karl H., Westport, CT 06880 (US)
(74) Representative: HOFFMANN - EITLE

(57) **Abstract**

A system and method for electronically delivering a batch of mail having a plurality of mailpieces. The system includes a database having a plurality of instruction templates, wherein each template corresponds to one of a plurality of electronic delivery mechanisms. An electronic inserter operative to generate electronic insert mailpieces and a computer processor is provided for associating each mailpiece with at least one instruction template for coupling each mailpiece with at least one electronic mailpiece. An electronic message router is provided for delivering the electronic mailpieces and coupled electronic insert mailpieces by one of the plurality of electronic delivery mechanism.

## Description

The present invention relates to a mail delivery system and method and, more particularly, to a system and method for electronic mass mailing a batch of documents having selected electronic inserts

Many businesses currently send out mass mailings to their customers or prospective customers. For example, a utility, e.g. electric company, may send out hundreds of thousands of bills to its customers every month. As another example, a company may wish to send targeted marketing material, such as a sales letter, to prospective customers on a mailing list. In either example, a company may augment the bill or basic sales letter with additional material called "inserts," for example, a brochure or a glossy advertisement.

There currently exist computer systems, software, and specialized peripherals for producing mass mailings for physical delivery, e.g. through the U.S. Postal Service or by courier. With the advent of new forms of electronic mail delivery, however, it is becoming more desirable to augment existing mass mailing capability with electronic delivery mechanisms, such as by electronic mail (email), facsimile, pager, or publication to a page on the World Wide Web. However, there are many reasons why it is difficult to upgrade or replace these computers systems for electronic mail delivery.

Often these computer systems are called "legacy" computer systems because they are relatively old computer systems handed down from previous generations of company management. These legacy computer systems, however, are still effective and often control processing vital to the company's business, e.g. bill production. Such legacy systems for mass mailing document production typically run on a mainframe computer and are complex and expensive. Accordingly, companies are reluctant to modify, upgrade, or replace these critical document generation applications.

Another reason why upgrading a business application is difficult is that the business application is written by a third-party developer with exclusive access to the source code and unwilling or unable to upgrade the application. For example, the business application may have been written by a company that has gone out of business or discontinued support for that application.

Even if a company has access to the source code of its mass mailing application, the company may not have the resources in terms of time or programming staff to make the necessary modifications for electronic mail delivery.

As an additional complication, electronic mail delivery may take a variety of forms, e.g. email, facsimile, pager. Each electronic delivery mechanism imposes restrictions on the nature of inserts added to the mailing. For example, an alphanumeric pager can only receive a small number of characters.

There exists a need for adding capabilities of electronic mail delivery to existing mass mailing systems. There is also a need for handling inserts in a manner appropriate to the delivery mechanism.

These and other needs are met by an electronic delivery system and method in which a printstream processor separates documents into a physical delivery printstream and an electronic delivery printstream based on delivery preferences stored in a database. A printer prints the physical delivery printstream to create printed documents. A physical inserter generates physical mail pieces including one of the printed documents and, for at least some of the physical mail pieces, respective physical inserts. An electronic inserter splits the electronic delivery printstream into electronic documents and generates electronic mail pieces. Each of the electronic mail pieces includes one of the electronic documents and, for at least some of the electronic mail pieces, an electronic insert. The electronic insert may be a link to a World Wide Web site, a text attachment, a document, or an electronic copy of a physical insert.

A message router delivers the electronic mail pieces via an electronic delivery mechanism specified in the delivery preferences, e.g. to a web server, an electronic mail address, a pager, a facsimile machine, and a printer. Preferably, the message router is configured to deliver an electronic mail piece by one electronic delivery mechanism and a notification message by another electronic delivery mechanism. The system may include a regeneration processor for causing a physical mail piece to be generated, corresponding to an electronic mail piece that has not been delivered.

Another aspect of the invention is a method of mass mailing in which a first batch of print images is received. The method includes determining whether or not each print image is to be delivered physically, in which case the print image is stored in a second batch, or electronically, in which case the print image is stored in a third batch. Preferably, first records indicating a physical delivery address is stored for all the print images of the first batch, and second records indicating an electronic delivery address is stored for all the print images of the third batch.

The software aspects encompass media or carrier waves bearing sequences of computer executable instructions for performing the steps of the invention. A computer readable medium, as used herein, may be any medium that can bear instructions or code for performing a sequence of steps in a machine readable form, such as a floppy disk, flexible disk, hard disk, magnetic tape, any other magnetic medium, a CD-ROM, an other optical medium, a RAM, ROM, PROM, EPROM, FLASH-EPROM, and any other memory chip or cartridge. A carrier wave signal is any type of signal that may carry digital information representative of the instructions or code for performing a sequence of steps. Such a carrier wave may be received via a network, over a modem, or as a radio-frequency or infrared signal, or any other type of signal which a computer may receive and decode.

Additional objects, advantages, and novel features of the present invention will be set forth in part in the detailed description which follows, and in part will become apparent upon examination or may be learned by practice of the invention. The objects and advantages of the invention may be realized and obtained by means of the instrumentality's and combinations particularly pointed out in the appended claims.

The present invention is illustrated by way of example and not by limitation, in the figures of the accompanying drawings, wherein elements having the same reference numeral designations represent like elements throughout and wherein:
Figure 1 is a diagram of the printstream delivery architecture according to an embodiment.
Figure 2 is an input/output diagram of a printstream processor according to an embodiment.
Figure 3 is a diagram showing the format of records of the mail run datafile and of the electronic mail run datafile according to an embodiment.
Figure 4 is an input/output diagram of an electronic inserter according to an embodiment.
Figure 5 is an input/output diagram of a job setup process according to an embodiment.
Figure 6 is an input/output diagram of a regeneration processor according to an embodiment.

A system and method of physical and electronic printstream delivery are described. In the following description, for purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

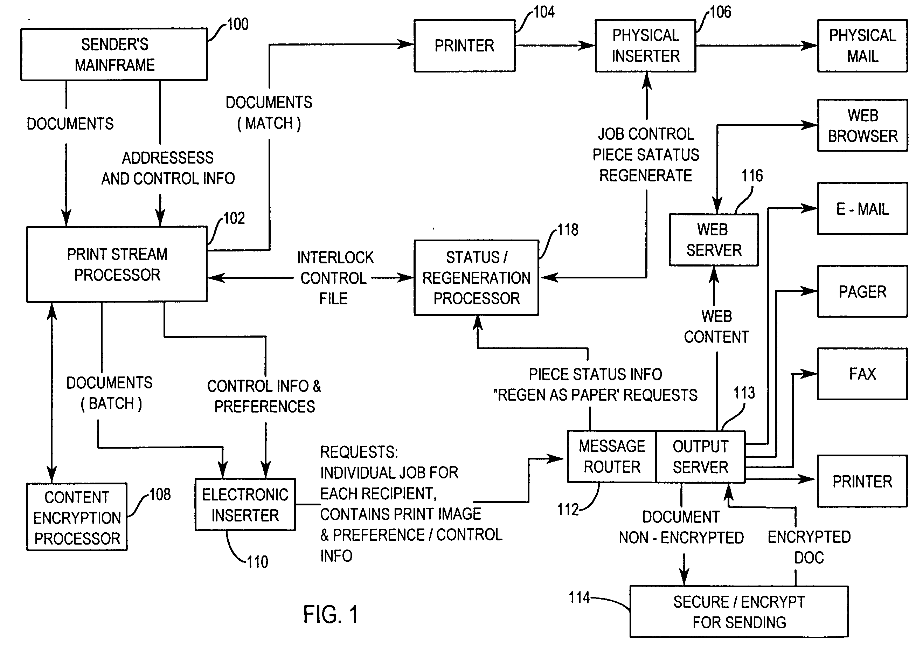

Figure 1 depicts a printstream delivery architecture according to an embodiment of the present invention. A user at a sender's mainframe **100** submits to printstream processor **102** documents in a printstream, addressing information in the form of delivery preferences stored in a database, and control information specifying, e.g., what inserts are to be included with each document in the printstream.

A printstream may be a batch of documents or print images of documents produced by a third-party or legacy business application. For example, a billing system may produce a batch of bills that are to be printed and sent to each customer. By employing a printstream processor **102** as a post processor with supplemental addressing and control information outside of the business application that produced the printstream, the functionality of the business application can be extended without change to the business application.

Printstream processor **102** splits the submitted printstream into one of two printstreams based on the addressing information in the delivery preferences. One printstream is a physical delivery printstream, in which the documents are to be delivered, as specified in the addressing information, to a physical address via a physical delivery mechanism, for example, the U.S. Postal Service or a courier service. The other printstream is an electronic delivery printstream, in which the documents are to be delivered via an electronic delivery mechanism, e.g. the electronic mail or facsimile, as specified in the delivery preferences. Printstream processor **102** may encrypt the documents with a content encryption processor **108**.

The physical delivery printstream is sent from the printstream processor **102** to a printer **104** where the documents in the physical delivery printstream are printed on a tangible medium such as paper. The printed documents are sent to a physical inserter **106** where they are processed into physical mail pieces. For example, a physical mail piece may contain a properly addressed envelope with the proper postage and stuffed with the printed document. In addition, the envelope may include additional printed matter, called physical inserts, selected according to criteria in the control information. The physical mail pieces are then ready for delivery by traditional means, e.g. through the U.S. Postal Service.

The electronic delivery printstream is sent to an electronic inserter **110**, which separates out the individual documents in the electronic delivery printstream and combines the document with the appropriate electronic insert based on the control information to produce an electronic mail piece. Moreover, the nature of the electronic insert is tailored to the particular electronic delivery mechanism specified in the addressing information. For example, an insert for a facsimile delivery is another document faxed along with the individual document. As another example, delivery to a World Wide Web site involves an insert which is a link specifying the URL (Uniform Resource Location) of another page on the World Wide Web.

The separate electronic mail pieces are sent to message router **110** for delivery to the delivery mechanism specified in the addressing information, e.g. to a web server **116**, electronic mail address, pager, facsimile machine, or a networked printer. The message router **112** is configured to send a separate notification via another delivery mechanism. For example, message router **112** may deliver an electronic mail piece to a web server **116** and send the recipient a generic fax that informs the recipient of the delivery to the web server **116**. In addition, message router **112** may encrypt or otherwise provide for security of the outgoing electronic mail piece via security module **114**.

If the electronic mail piece is not delivered after a certain length of time, the message router **112** generates and sends a "failed to process" or "failed to deliver" message to status/regeneration processor **118**, which (depending on the users configured system, which system is configurable) may cause a physical version of the undelivered electronic mail piece to be produced by printer **104** and physical inserter **106** and delivery by physical means.

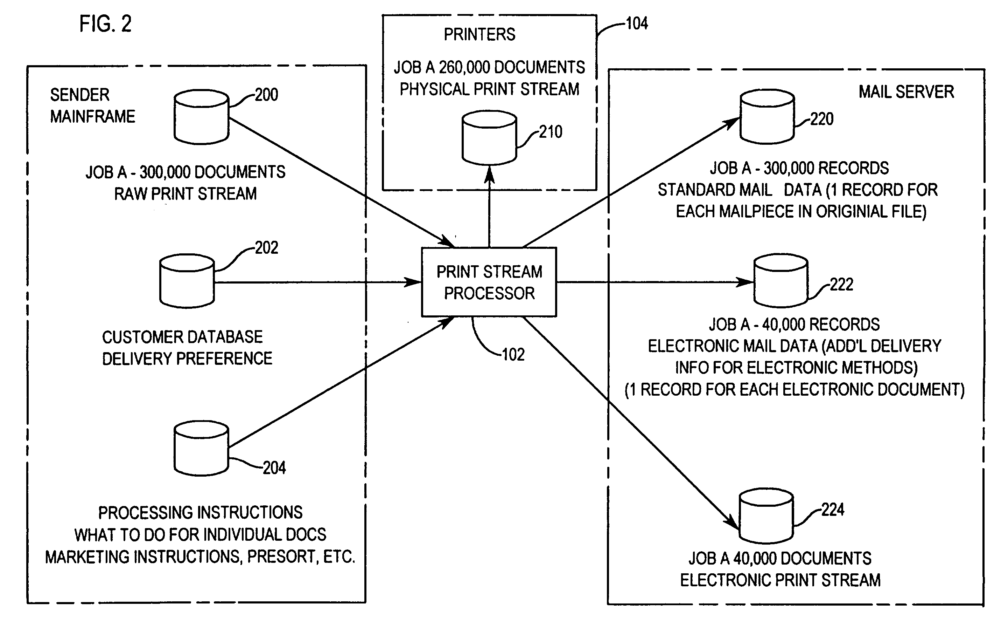

Exemplary input and output of printstream processor **102** is illustrated in Figure 2. A user at a mainframe may submit to the printstream processor **102** a job "A" comprising 300,000 documents in a raw printstream **200**. This raw printstream **200** may be the output of a legacy application executing on the mainframe. The printstream processor **102** may be an application executing on the same mainframe or an application executing on another computer, e.g. a workstation or PC, networked to the mainframe.

The printstream processor **102** utilizes a customer database **202** of delivery preferences that indicate how each document for each recipient is to be delivered, e.g. physically, by fax, etc. Control information **204** is also input to printstream processor **102** to specify processing instructions, for example, which inserts are to be included and whether to presort the documents.

Printstream processor **102** separates the raw printstream into two printstreams, one for physical delivery and another for electronic delivery. In the example depicted in Figure 2, printstream processor **102** separates raw printstream **200** into a physical delivery printstream **210** comprising 260,000 documents. Physical delivery printstream **210** is sent to printer **104** for the next step in the physical delivery process. The other printstream is electronic delivery printstream **224** comprising the remaining 40,000 documents of the raw printstream **200**. Electronic delivery printstream **224** is sent to electronic inserter **110** for the next step in the electronic delivery process.

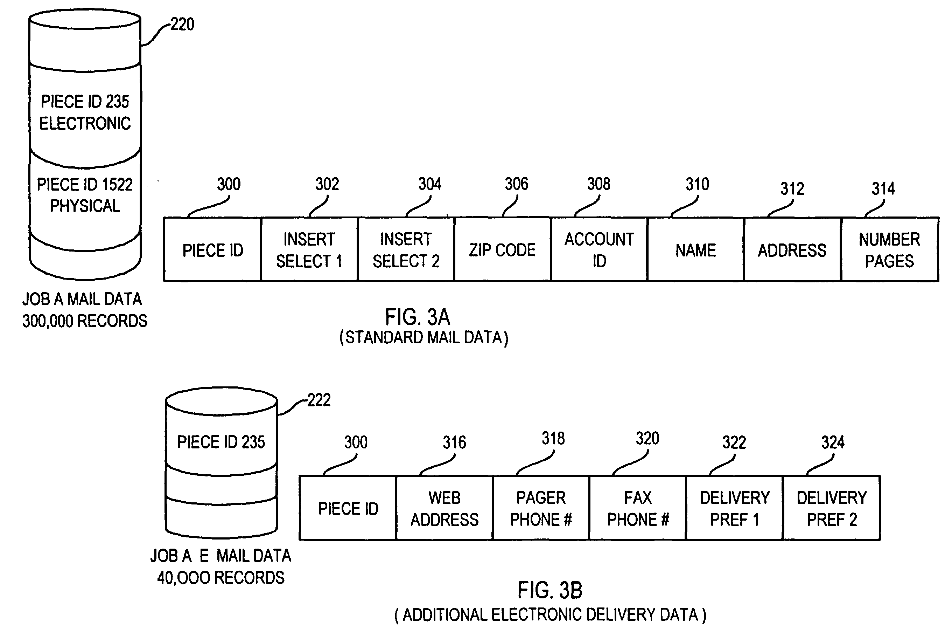

Printstream processor **102** also produces two datafiles, mail run datafile **220** and electronic mail run datafile **222**. Mail run datafile **220** contains one record for every document in the original raw printstream **200**. The contents of each record in mail run datafile **220** is illustrated in Figure 3. Each mail run datafile **220** record includes a piece identifier **300**, which may specify the sort order of the documents. In addition, each record may contain one or two insert selections **302** and **304**, which specify the insert(s) that may be included with the respective document. For example, an insert selection **302** for a physical mail piece may be a brochure describing a ski resort in Vermont. The mail run datafile **220** record also includes such physical delivery information as a ZIP code **306**, an account identifier **308**, a name **310**, an address **312**, and a number of pages **314** for the document. The mail run datafile **220** is used by the printer **104** and physical inserter **106** for generating physical mail pieces with the selected inserts and the proper physical mail address.

If a mail piece is to be delivered by electronic means, as specified in the customer database **202** of delivery preferences, the printstream processor **200** creates a record in the electronic mail run datafile **222** in parallel to the mail run datafile **220**. Thus, the tenth record in electronic mail run datafile **222** corresponds to the tenth electronic mail piece in electronic delivery printstream **224**. Each of the electronic mail run datafile **222** records contain a piece identifier **300**, in order to match up with the corresponding record in the mail run datafile **220**. The records also contain electronic delivery information derived from the customer database **202** such as a Web address or URL **316**, a pager telephone number **318**, and a fax number **320**. In addition, the records contain delivery and notification preferences **322** and **324**, to specify which delivery option is to be given priority. As described in more detail hereinafter, the electronic delivery information in records of the electronic mail run datafile **222** is attached to the respective electronic mail piece by electronic inserter **110** for delivery by message router **112**.

Although mail run datafile **220** contains information mainly for physical delivery, all documents to be delivered electronically have a corresponding entry in mail run datafile **220** in case the mail piece has to be delivered physically. Electronic mail pieces may require physical delivery, via regeneration processor **118** described in more detail hereinafter, if the electronic delivery mechanisms do not successfully deliver the electronic mail piece. For example, electronic mail piece **235** in Figure 3 has a record in both mail run datafile **220** and electronic mail run datafile **222**.

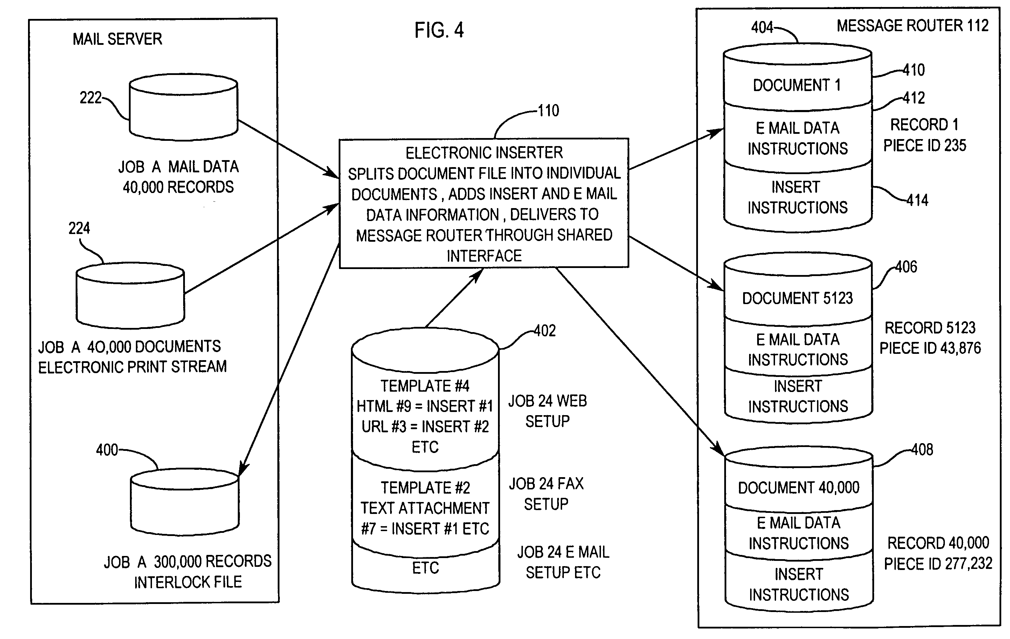

As depicted in Figure 4, electronic inserter **110** splits the electronic delivery printstream **224** into individual electronic mail pieces and packages them with an insert appropriate for the electronic delivery mechanism specified for the electronic mail pieces. Electronic inserter **110** is preferably a computer software application, which may be executed on the same computer as the printstream processor **102** or another computer on the same network.

Figure 4 depicts three electronic mail pieces **404**, **406**, and **408**, which may be produced by electronic inserter **110**. Each electronic mail piece, e.g. piece **404**, comprises a document **410** obtained from electronic delivery printstream **224**, which was split from raw printstream **200** by printstream processor **102**. The electronic mail piece also includes electronic mail data instructions **412** derived from the corresponding record in the electronic mail run datafile **222**, and insert instructions derived from job setup file **402**.

Inserts for each batch of mail are defined by a job setup. For example, a record in the mail run datafile **220** may call for insert 1, which may be targeted marketing material for ski vacations in Vermont. In the physical inserter **106** a stack of brochures about ski resorts in Vermont may be loaded for insertion. In the case of the electronic inserter **110**, for a particular batch of mail, the insert needs to be developed in a format appropriate for each delivery mechanism.

Accordingly, the job setup for this batch of mail, e.g. job setup file **402**, contains a set of templates and inserts for each delivery mechanism. The job setup for the web server delivery mechanism may specify the URL of a home page for a Vermont ski resort. If the delivery mechanism is electronic mail, the corresponding insert may specify a text memo to be attached to an electronic mail message. It is possible for a job setup to specify no appropriate insert for a specific delivery mechanism, e.g. fax. It is noted that templates may specify logos and standard information to be included in each document. Job setups may also specify "hot-links," which are inserts with no corresponding physical counterparts, for example, a corporate logo on a corporate web page.

Job setups can also specify a generic notification message for each delivery mechanism available for notification. For example, a fax may be sent to a recipient, informing the recipient that a web page includes his latest statement, for example a monthly billing statement. Generic notification messages are not personalized, and so can be predefined for an entire job or batch of mail pieces.

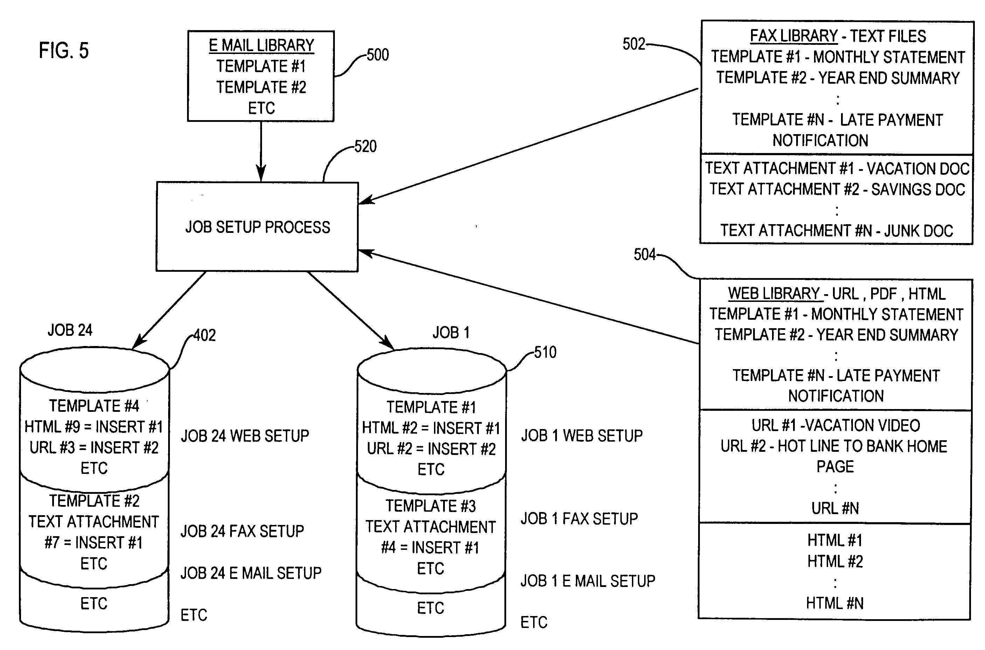

Referring to Figure 5, job setups may be defined by a job setup process **520** (not shown in Figure 1). The job setup process is an interactive application that allows a user to select templates and inserts for each delivery mechanism from a library. For example, electronic mail library **500** includes templates for formatting electronic mail messages. Fax library **502** may include templates and inserts as text files and text attachments to be sent along with a fax. Web library **504** includes the inserts in the form of URLs (web page addresses), PDF (Postscript Display Format, a portable display standard), or HTML (Hyper-Text Markup Language) files, which are common on the World Wide Web. Thus, the job setup process **520** prompts the user for templates, HTML files, text attachments, e.g. through a dialog box or a form for each electronic delivery mechanism. The job setup process **520** records and enables editing of the user's selections of templates and inserts for each electronic delivery mechanism. The output of the job setup process **520** is a job setup file, e.g. job setup file **402** and job setup file **518**.

Referring back to Figure 4, electronic inserter **110** applies job setup file **402** to a batch of mail pieces in the electronic delivery printstream **224** for producing electronic mail pieces **404**, **406**, and **408** with the appropriate insert instructions, e.g. insert instructions **414**. The electronic inserter **110** also reads out corresponding records from electronic mail run datafile **222** for generating the application electronic delivery information **412** in each electronic mail piece. Furthermore, the electronic inserter **110** stores status information about each electronic mail piece in interlock file **400**. Each electronic mail piece is placed on a server executing message router **112**, which may be a separate server from the mail server upon which the electronic inserter **110** is executed.

The message router **112** detects that a new electronic mail piece has been received from the electronic inserter **110**. The message router **112** decodes the delivery preference data **322** and **324**, which was derived from the corresponding record in electronic mail run datafile **222** and appended to the electronic mail piece as electronic mail delivery instructions **412** by electronic inserter **110**. Message router **112** sends the electronic mail piece to an output server subsystem **113** (shown in Figure 1) for actual delivery. For example, if web server **116** is specified by the first delivery preference **322**, the output server subsystem **113** sends the electronic mail piece to web server **116**. The system may be configured to wait for a preset amount of time, e.g. four days, for the recipient to access the web page where the electronic mail piece was delivered. If the recipient has not accessed the web page in the preset amount of time, the electronic mail piece is considered not be delivered. For other delivery mechanisms, the delivery failure may be detected more directly, e.g., in the case of a busy signal for a fax number.

If the electronic mail piece is not delivered according to the delivery mechanism specified in the first delivery preference **322**, the corresponding document is processed according to the second delivery preference **324** until all the delivery preferences have been exhausted. Status for each electronic mail piece is reported to status/regeneration processor **118** and stored in the interlock file **400**. It is important for the message router **112** to be provided with a complete electronic delivery package, that is an electronic mail piece with insert instructions **414** for each electronic delivery mechanism, because the electronic mail piece may be in process for many days after the electronic inserter **110** has processed the entire batch. For example, the message router **112** may have to wait days for the Web server **116** to be accessed before utilizing the second delivery option.

The message router **112** communicates with the electronic inserter **110** through message files. For example, a separate downloaded configuration file (not shown) may specify whether to stop processing or ignore when an attachment file is missing. There is also communication for indicating that error conditions have been fixed and that the message router **112** should restart processing if stopped.

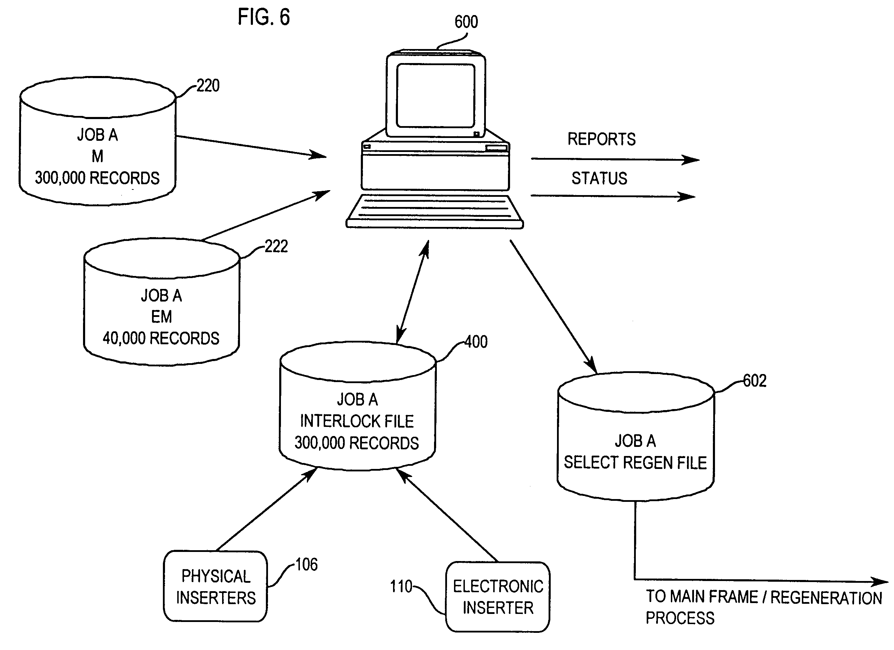

The interlock fil**e 400** is used for checking document status and determining which electronic mail pieces need to be regenerated if all the electronic delivery mechanisms have proved unsuccessful. In particular, the status/regeneration processor **118**, which may be a program executing on mail server **600** in Figure 6, scans the interlock file **400** for documents whose status indicates that regeneration is necessary. For physical mail pieces this may occur because the physical inserter **106** generated a bad insert, e.g. an insert jammed. For electronic mail pieces, regeneration maybe necessary for those electronic mail pieces that have not been successfully delivered.

Accordingly, the regeneration processor **118** outputs a "regen" file **602** containing the piece identifiers **300** of the documents that need to be regenerated, printed by printer **104**, and processed by physical inserter **106**.

While the present invention has been described in connection with what is presently considered to be the most practical and preferred embodiments, it is to be understood that the invention is not limited to the disclosed embodiment, but, on the contrary, is intended to cover various modifications and equivalent arrangements included within the spirit and scope of the appended claims.

## Claims

1. A method for electronic mass mailing a batch of mail having a plurality of mailpieces, the method comprising the steps of:
providing a plurality of instruction templates, wherein each template corresponds to one of a plurality of electronic delivery mechanisms;
associating each mailpiece with at least one of the plurality of instruction templates; and
delivering each mailpiece by one of the plurality of electronic delivery mechanisms.

2. A method for electronic mass mailing a batch of mail as recited in claim 1, further including the step of:
notifying a recipient that a mailpiece has been delivered by an electronic delivery mechanism other the electronic mechanism used to deliver the mailpiece.

3. A method for electronic mass mailing a batch of mail as recited in claim 2, wherein the step of notifying a recipient includes the step of notifying a recipient with a facsimile message indicating that the mailpiece has been delivered.

4. A method for electronic mass mailing a batch of mail as recited in claim 1 further including the steps of:
associating at least one mailpiece with at least first and second templates, wherein the first template provides a first choice electronic delivery mechanism and the second template provides a second choice delivery mechanism.

5. A method for electronic mass mailing a batch of mail as recited in claim 4, further including the steps of:
determining if the at least one mailpiece was delivered by the first choice electronic delivery mechanism; and
delivering the at least one mailpiece by the second choice delivery mechanism if the at least one mailpiece was determined not to be delivered by the first choice delivery mechanism.

6. A method for electronic mass mailing a batch of mail as recited in claim 5, further including the step of:
waiting a predefined amount of time before performing the determining step.

7. A method for electronic mass mailing a batch of mail as recited in claim 4, wherein the delivery mechanism is selected to deliver the mailpiece in accordance with one of the following delivery methods: an e-mail message; a pager message; a facsimile message or a site on the world wide web.

8. A method for electronic mass mailing a batch of mail as recited in claim 4, further including the step of:
providing at least one electronic insert configured to accompany an electronic mailpiece when being delivered by one of the plurality of electronic delivery mechanisms; and
associating at least one electronic mailpiece with the at least one electronic insert such that the at least one electronic mailpiece is accompanied with the at least one electronic insert when being delivered to a recipient by one of the electronic delivery mechanisms.

9. A method for electronic mass mailing a batch of mail as recited in claim 8, further including the step of:
providing insert instructions with each electronic mailpiece indicating whether the electronic mailpiece is to be associated with the at least one electronic insert;
determining from the insert instructions if an electronic mailpiece is to be accompanied by an electronic insert; and
delivering an electronic mailpiece with an electronic insert by one of the plurality of electronic delivery mechanisms.

10. A method for electronic mass mailing a batch of mail as recited in claim 4 further including the steps of:
providing a plurality of electronic inserts each being configured to accompany an electronic mailpiece when being delivered by one of the plurality of electronic delivery mechanisms;
providing insert instructions with each electronic mailpiece indicating whether the electronic mailpiece is to be associated with an electronic insert, and if so, which one of the plurality of electronic inserts is to accompany the electronic insert;
determining from the insert instructions if an electronic mailpiece is to be accompanied by an electronic insert; and
delivering an electronic mailpiece with one of the plurality of electronic inserts by one of the plurality of electronic delivery mechanisms.

11. A method for electronic mass mailing a batch of mail as recited in claim 4 further including the step of:
encrypting a mailpiece before delivering the mailpiece to a recipient.

12. A system for electronically delivering a batch of mail having a plurality of mailpieces, the system comprising:
a database having a plurality of instruction templates, wherein each template corresponds to one of a plurality of electronic delivery mechanisms;
an electronic inserter operative to generate electronic insert mailpieces
a computer processor for associating each mailpiece with at least one instruction template for coupling each mailpiece with at least one electronic mailpiece; and
a message router for delivering the electronic mailpieces and coupled electronic insert mailpieces by one of the plurality of electronic delivery mechanism.

13. A system for electronically delivering a batch of mail having a plurality of mailpieces as recited in claim 12, wherein the message router is configured to deliver at least one of the electronic mailpieces to a World Wide Web server and the electronic insert is a link to a page on the World Wide Web.

14. A system for electronically delivering a batch of mail having a plurality of mailpieces as recited in claim 12, wherein the message router is configured to deliver at least one of the electronic mailpieces via electronic mail.

15. A system for electronically delivering a batch of mail having a plurality of mailpieces, as recited in claim 12, wherein the message router is configured to deliver at least one of the electronic mailpieces to a pager.

16. A system for electronically delivering a batch of mail having a plurality of mailpieces, as recited in claim 12, wherein the message router is configured to deliver at least one of the electronic mailpieces to a facsimile machine and the electronic insert is a document.

17. A system for electronically delivering a batch of mail having a plurality of mailpieces as recited in claim 12, wherein the message router is configured to selectively deliver the electronic mailpieces to a web server, an electronic mail address, a facsimile machine, and a printer.

18. A system for electronically delivering a batch of mail having a plurality of mailpieces as recited in claim 12, wherein the message is configured to send a notification message by one of the plurality of delivery mechanisms.

19. A method for electronically delivering a document, comprising the steps of:
providing an electronic document to be delivered to a recipient;
providing a plurality of electronic document inserts;
selecting an electronic insert to accompany the electronic document when delivered to a recipient;
providing a plurality of electronic delivery mechanisms for delivering the electronic document and insert;
selecting from one of the plurality of electronic delivery mechanisms to choose a delivery mechanism to deliver the electronic document and insert to the recipient;
delivering the electronic document and insert to the recipient; and
notify the recipient of the delivery of the electronic document with an electronic delivery mechanism other than the chosen electronic delivery mechanism.
